# EUROPEAN PATENT APPLICATION

(11) **EP 2 037 702 A2**
(43) Date of publication of application: **18.03.2009**
(21) Application number: 08162181.5
(22) Date of filing: 11.08.2008
(51) Int. Cl.: H04R 25/00

(54) **Protective finishing plug for a hearing instrument shell**

(30) Priority: 12.09.2007 US 853857
(71) Applicant: Siemens Hearing Instruments, Inc., Piscataway, NJ 08854 (US)
(72) Inventor: Saltykov, Oleg, Fairlawn, NJ 07410 (US)
(74) Representative: Clarke, Alison Clare

(57) **Abstract**

During tumbling, a plug may be inserted into the opening of a hearing instrument shell to protect the hole and minimize additional cleaning operations subsequent to tumbling. A suitable conforming plug may be fabricated at the same time the shell is made.

## Description

### Background and Summary of the Invention

A hearing instrument for insertion into the user's ear canal may be manufactured by using one of the processes, such as stereo lithography, mentioned in U.S. Patent Application Publication No. 2002/0196954 A1, published December 26, 2002 and titled, "Modeling and fabrication of three-dimensional irregular surfaces for hearing instruments," incorporated here by reference. When the shell of the instrument has been completed, it may be sent to a tumbling process for finishing.

If the shell has an integral faceplate, such as the one described in U.S. Patent 7,191,029, issued February 21, 2007, and titled, "Rapid Prototype Fabrication of a Monolithic Hearing Instrument Housing with an Integrally-fabricated Faceplate," incorporated here by reference, it may have an opening that accepts an electronic module. In such a case, it may be desirable to protect the features of the opening that accepts the electronic module from abrasion and wear that may occur during tumbling.

The opening may be protected by inserting a plug into the opening and then later discarding it. Although the plug could be separately manufactured for the shell, it would be more expedient to fabricate the plug at the same time the shell is made. Further, if stereo lithography or a similar process is employed, it may be advantageous to fabricate the plug as an integral part of the structure that emerges from the manufacturing process. The plug would then pushed down into the module opening where it would engage by virtue of an interference fit or perhaps a latching mechanism. After tumbling, the plug would be removed from the module opening and discarded.

### Brief Description of the Drawings

Figure 1 is a drawing of a hearing instrument comprising a shell and an opening for an electronics module;
Figure 2 is a drawing of the hearing instrument of Figure 1 illustrating a plug created with the shell;
Figures 3-5 are partial cross-sectional views of a hearing instrument shell and a plug; and
Figures 6 and 7 are drawings of the hearing instrument of Figure 2 where the plug has been inserted into the opening for the electronics module.

### Description of the Invention

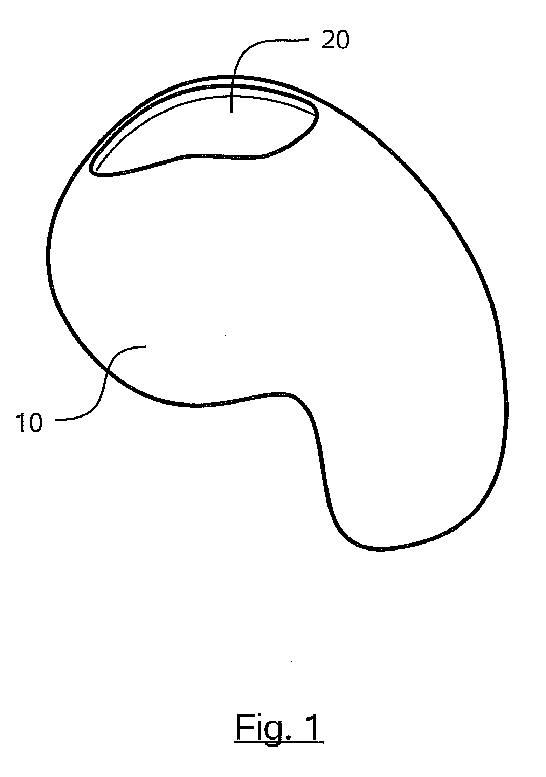

Figure 1 illustrates a hearing instrument shell 10 comprising an opening 20 for an electronics module (not shown). To insure that the module resides securely in the opening 20, its dimensions must fall within a predetermined design tolerance. During fabrication and in particular during a finishing process such as tumbling, the opening 20 must be protected or the module may not reside properly therein.

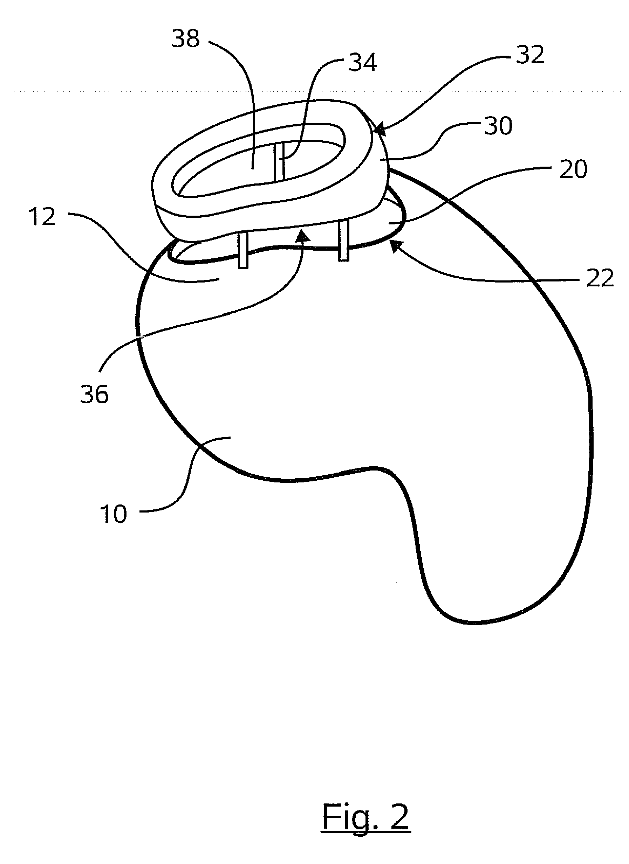

A conforming plug 30 for the opening 20 is illustrated in Figure 2. A fabrication process such as stereo lithography permits fabrication of a conforming plug 30 simultaneously with the shell 10. As can be seen from Figure 2, the outer contour 32 of the plug 30 conforms to the contour 22 of the opening 20.

The fabrication process creates the structure layer by layer in the vertical direction. Assuming that the shell 10 is created first, thin supporting members 34 extend upwardly from the outer surface 12 of the shell 10, to what will be the underside 36 of the plug 30. An opening 38 may be provided in the conforming plug 30 to facilitate its later removal from the module opening 20.

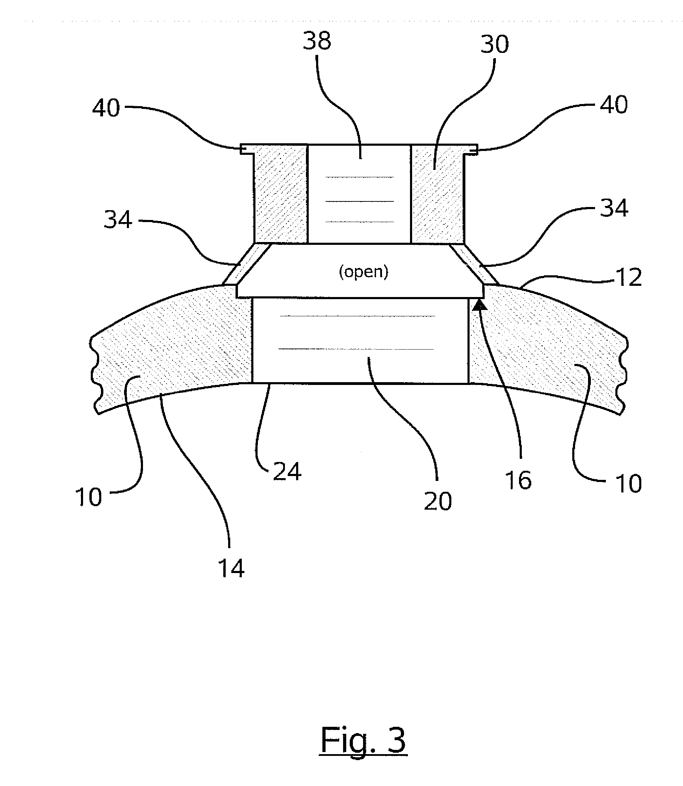

The conforming plug 30 is shown in a cross-sectional view in Figure 3. As shown in this view, the plug 30 also has a flange 40 that will reside in a conforming recess 16 adjacent the opening 20 for the module, near the top 12 of the shell 10. (For clarity of the presentation, the recess 16 and the flange 40 are not shown in Figures 1 or 2.)

The supporting members 34 are configured and sized to easily break and detach from the surface 12 of the shell 10 when the plug 30 is inserted into the opening 20. The thickness and cross-sectional profile of the supporting members 34 are selected to facilitate their removal from the shell 10 when the plug 30 is inserted into the opening 20, but provide adequate support during fabrication. For example, where the hearing instrument shell 10 has a thickness of 0.6 - 1.0 mm and the faceplate has a thickness of 4.0 - 5.0 mm, the supporting members 34 may have a thickness of 0.5 - 1.5 mm. The members 34 could have a square, rectangular, circular, elliptical, or other suitable cross-section.

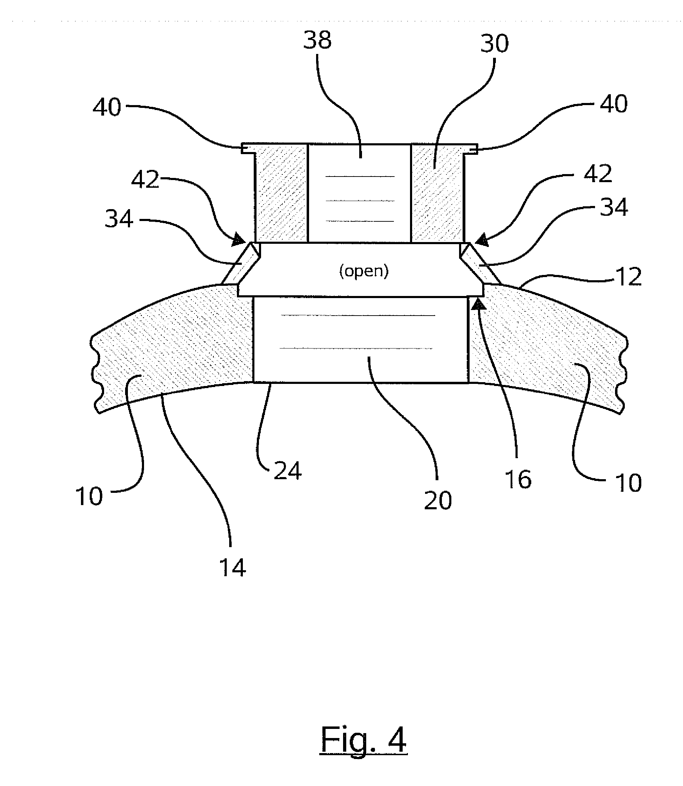

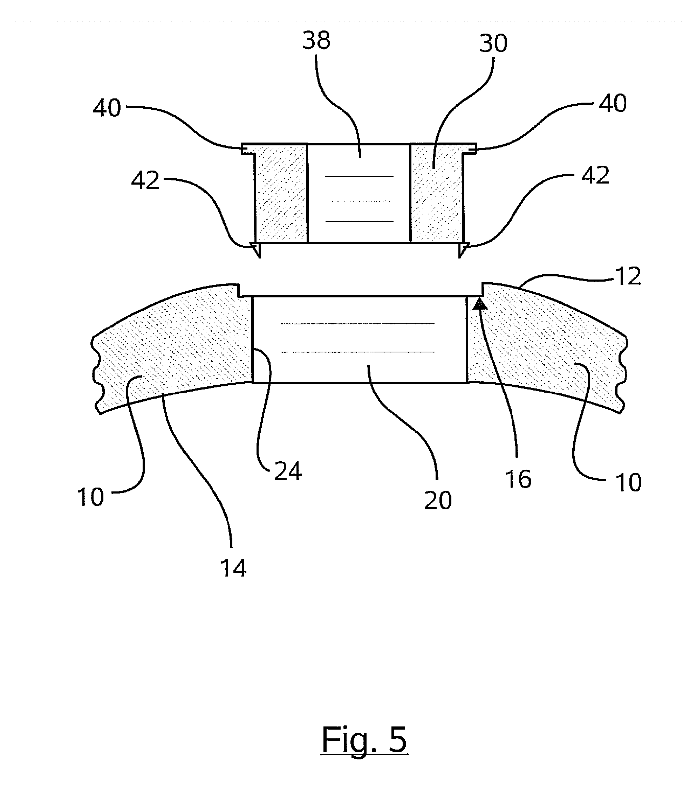

The plug 30 may also have two or more optional latches 42 for securing the plug 30 in the opening 20, as illustrated in Figures 4 and 5. In lieu of latches, the plug 30 could be sized to provide an interference fit within the opening 20.

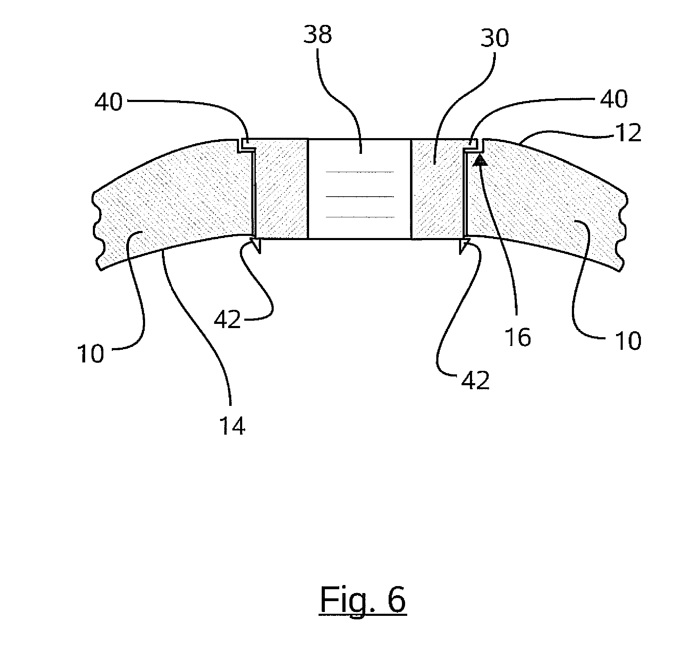

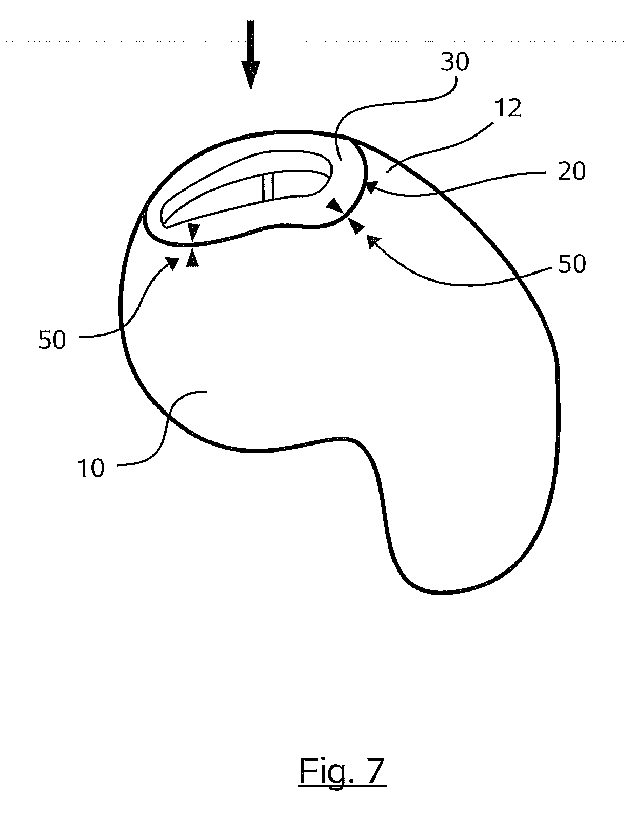

Before tumbling, the conforming plug 30 is pushed into the opening 20 of the shell 10, initially breaking the thin supporting members 34 (see Figures 6 and 7). If latches 42 have been provided for the plug 30, the latches 42 engage the underside 14 of the shell 10, as shown in Figure 6. After the tumbling is completed, the plug 30 is removed and discarded.

If desired, registration marks 50 may be added to the plug 30 and the shell 10 to assist in orienting the plug 30 when it is inserted into the opening 20. They are schematically illustrated as arrows in Figure 7, but may be of any shape and could be fabricated by making small elevations on the outer surface 12 of the shell 10 and on the plug 30.

## Claims

1. A method for fabricating a hearing instrument comprising a shell, the shell comprising an integrated faceplate having an opening for accepting an electronics module, the method utilizing a rapid manufacturing technique and comprising:
fabricating the shell;
fabricating the faceplate as integral part of the shell;
fabricating the opening in the faceplate;
fabricating a plurality of thin supporting members, where the supporting members extend from the faceplate; and
fabricating a plug for insertion into the opening in the faceplate, the plug extending from the supporting members.

2. A method as set forth in claim 1, further comprising fabricating a plurality of latches on the underside of the plug.

3. A method for fabricating a temporary conforming plug for the electronics module opening in an integrated faceplate of a shell of hearing instrument, the method utilizing a rapid manufacturing technique and comprising:
fabricating a plurality of thin supporting members, where the supporting members extend from the faceplate; and
fabricating a plug for insertion into the opening in the faceplate, the plug extending from the supporting members.

4. A method as set forth in claim 3, further comprising fabricating a plurality of latches on the underside of the plug.

5. A hearing instrument comprising a shell, the shell comprising an integrated faceplate having an opening for accepting an electronics module, the instrument fabricated utilizing a rapid manufacturing technique and comprising:
a shell;
a faceplate fabricated as integral part of the shell and comprising an opening;
a plurality of thin supporting members, where the supporting members extend from the faceplate; and
a plug for insertion into the opening in the faceplate, the plug extending from the supporting members.

6. An apparatus as set forth in claim 5, further comprising a plurality of latches on the underside of the plug.
